# EUROPÄISCHE PATENTSCHRIFT

(11) **EP 0 396 797 B1**
(45) Veröffentlichungstag und Bekanntmachung des Hinweises auf die Patenterteilung: **08.12.1993**
(21) Anmeldenummer: 89108419.6
(22) Anmeldetag: 10.05.1989
(51) Int. Cl.: F16C 7/00, F16C 9/04

(54) **Verfahren und Vorrichtung zum Bruchtrennen von Pleueln**
Method and device for fracture-separation of connecting rods
Dispositif et procédé pour réfracter des bielles

(43) Veröffentlichungstag der Anmeldung: 14.11.1990
(73) Patentinhaber: Alfing Kessler Sondermaschinen GmbH, D-73413 Aalen (DE)
(72) Erfinder: Miessen, Walter, Dr.-Ing., D-7080 Aalen (DE); Fauser, Nikolaus, D-7093 Jagstzell (DE); Hähnel, Michael, Dipl.-Ing., D-7080 Aalen-Nesslau (DE)
(74) Vertreter: Kohlmann, Karl Friedrich, Dipl.-Ing.

(56) Entgegenhaltungen:
- EP-A- 0 167 320
- EP-A- 0 304 162
- US-A- 4 768 694

## Beschreibung

Die vorliegende Erfindung bezieht sich auf ein verfahren und eine Vorrichtung zum Bruchtrennen von Kappe und Stange von in Pulverschmiedetechnik hergestellten Pleueln.

Bekannte Verfahrensweisen zum Bruchtrennen von Kappe und Stange bei Pleueln basieren im Prinzip auf der Maßnahme, auf die Innenfläche des großen Auges des Pleuels mittels spezieller Vorrichtungen eine "Aufweitkraft" einwirken zu lassen und diese solange zu erhöhen, bis die Bruchgrenze des Pleuelmaterials erreicht ist und Kappe und Stange durch Bruch getrennt sind (Prinzip: vergleiche Fig. 6 der US-A-4 569 109 bzw US-A-4 768 694)
Um den Bruch an einer genau vorgegebenen Stelle realisieren zu können, werden dabei auf der Innenfläche des großen Auges und teilweise auch auf dessen Außenfläche Kerben vorgesehen, deren Kerbwirkung den Bruchverlauf vorgibt (vgl. US-A-45 69 109 und US-A-46 93 139).

Es sind auch Bruchtrennverfahren bekannt, bei denen in der gewünschten Bruchebene Bohrungen im Pleuel vorgesehen werden, über die durch "Aufweitdorne" (vgl. Fig. 3 der US-A-3 994 054) die für das Bruchtrennen erforderlichen Kräfte in das Pleuelmaterial eingeleitet werden.

Da sich derartige mechanische Bruchtrennverfahren u.a. wegen der ungünstigen Reibungsverhältnisse insbesondere für die Serienfertigung nicht eignen, sind bereits Verfahrensweisen entwickelt worden, bei denen die Aufweitkraft hydraulisch erzeugt wird (vgl. US-A-47 54 906). Derartige Verfahrensweisen sind jedoch wegen der erforderlichen Hockdruckhydraulik technisch sehr aufwendig und erbringen ebenfalls keine optimalen Bruchtrennergebnisse.

Aufgabe der vorliegenden Erfindung ist es, eine vollkommen neuartige Verfahrensweise und Vorrichtung zum Bruchtrennen von Pleueln zu schaffen, die einen einfachen Aufbau aufweist und verbesserte Bruchergebnisse erbringt.

Diese Aufgabe wird erfindungsgemäß durch eine Verfahrensweise gelöst, die dadurch gekennzeichnet ist,
- daß die Kappe oder die Stange des Pleuels auf einer quer zur Bruchtrennungsebene verfahrbaren Halterung festgespannt wird,
- daß der nicht auf der Halterung festgelegte Teil des Pleuels ortsfest gehalten wird, und
- daß auf die Halterung in Bruchtrennungsrichtung ein in der Symmetrieachse des Pleuels wirkender gerader zentraler Stoß ausgeübt wird.

Der Erfindung liegt der Gedanke zugrunde, daß optimale Bruchergebenisse stets dann erreicht werden, wenn die Bruchtrennkraft zum einen schlagartig einwirken kann und zum anderen bei diesem Vorgang das Pleuel starr und ohne Spiel eingespannt ist. Gerade die schlagartige Einleitung der Bruchtrennkraft ist bei bekannten Verfahrensweisen und Vorrichtungen nicht möglich, da bei diesen für den Aufbau der Bruchtrennkraft stets eine gewisse Zeit erforderlich ist.

Besonders gute Bruchergebnisse werden erzielt, wenn die Halterung bzw. die Halterungen in Stoßrichtung bis auf einen Wert unterhalb der Streckgrenze des Pleuelmaterials vorgespannt werden und erst im vorgespannten Zustand ein gerader zentraler Stoß ausgeübt wird.

Versuche haben gezeigt, daß besonders gute Ergebnisse erzielt werden, wenn die Vorspannkraft gleich oder kleiner 80% der Bruchkraft ist.

Grundsätzlich können die Halterungen in verschiedenster Weise gelagert sein. Besonders gute Ergebnisse werden erreicht, wenn die Halterungen geradlinig parallel zur Symmetrieachse des Pleuels verfahrbar gelagert sind.

Versuche haben ergeben, daß Kappe und Stange des Pleuels im Bereich der Bruchfläche besonders dicht, fugenlos und genau aufeinanderpassen, wenn unmittelbar nach dem Bruchtrennvorgang die Kappe und die Stange im Bereich der Bruchtrennebenem mit hoher Preßkraft aneinandergepreßt werden.

Besonders gute Passergebnisse werden dabei dann erreicht, wenn die Preßkraft der Spannkraft entspricht, mit der die Kappe und die Stange beim späteren Einsatz des Pleuels durch die Pleuelschrauben aufeinandergepreßt werden.

Um optimale Bruchtrennergebnisse zu erzielen, muß der gerade zentrale Stoß dem jeweils verwendeten Pleuelmaterial, der Form und der Größe der Bruchquerschnittsfläche sowie der jeweiligen Anordnung der den Bruchverlauf beeinflussenden Maßnahmen (wie z.B. den Kerben o.dgl.) genau angepaßt werden. Dies erfolgt im Wege einfacher Versuche, über die die den zentralen geraden Stoß beeinflussenden Massen und Geschwindigkeiten den jeweiligen Gegebenheiten entsprechend verändert werden.

Eine bevorzugte Vorrichtung zur Durchführung des verfahrens nach dem Patentanspruch 1 umfaßt folgende Elemente:
- eine ortsfeste Vorrichtungsbasis,
- eine Aufnahme für den ortsfest gehaltenen Teil des Pleuels, die auf der Vorrichtungsbasis starr befestigt ist,
- eine Halterung für den nicht ortsfest gehaltenen Teil des Pleuels, die in einer auf der Vorrichtungsbasis befestigten Führung quer zur Bruchtrennungsebene und parallel zur Symmetrieachse des Pleuels in Grenzen verfahrbar gelagert ist, sowie
- eine Schlagmasse, die auf die Halterung in Bruchtrennrichtung des Pleuels einen in dessen Symmetrieachse wirksamen geraden zentralen Stoß ausübt.

Ein besonders einfacher technischer Aufbau wird bei der Vorrichtung zur Durchführung des Verfahrens gemäß Patentanspruch 1 dadurch erreicht, daß die ortsfeste Vorrichtungsbasis stehend angeordnet ist und die Schlagmasse als schwerkraftgetriebenes Schlaggewicht ausgebildet ist. Auf diese Weise ist kein spezieller Antrieb für das Schlaggewicht erforderlich. Es muß lediglich eine einfache Hebevorrichtung vorgesehen werden, mit der das Schlaggewicht in seine angehobene Ausgangsstellung zurückgeführt wird.

Die ortsfeste Vorrichtungsbasis kann jedoch auch liegend angeordnet werden. In einem solchen Fall ist ein Kraftantrieb für die Schlagmasse bzw. die Schlaggewichte erforderlich. Ein besonders einfacher Aufbau ergibt sich, wenn der Kraftantrieb als hydraulischer oder pneumatisch betätigter Beschleunigungszylinder für die Schlaggewichte ausgebildet ist.

Bei stehender Anordnung kann im Bedarfsfalle zur Beschleunigung des schwerkraftgetriebenen Schlaggewichtes zusätzlich ein hydraulischer oder pneumatischer Beschleunigungszylinder vorgesehen und auf diese Weise der Schwerkraftantrieb unterstützt werden.

Grundsätzlich kann die ortsfeste Vorrichtungsbasis in jeder beliebigen Weise ausgestaltet sein. Ein besonders einfacher Aufbau ergibt sich, wenn die Vorrichtungsbasis als Grundplatte ausgebildet ist. Bei stehender Anordnung ist es vorteilhaft, die Grundplatte in eine Ständeranordnung zu integrieren.

Die Schlagmasse bzw. die Schlagmassen können in verschiedenster Weise gelagert bzw. geführt sein. Vorteilhaft ist es, wenn die Schlagmasse bzw. die Schlagmassen auf einer auf der Vorrichtungsbasis befestigten Führung geradlinig hin- und herverschiebbar gelagert sind.

Wie bereits erwähnt, ist es für ein optimales Bruchtrennergebnis erforderlich, daß die Pleuel beim Bruchtrennvorgang starr und spielfrei gehaltert bzw. eingespannt sind. Dies wird gemäß einer bevorzugten Ausführungsform der erfindungsgemäßen Vorrichtung dadurch erreicht, daß die Halterung und die Aufnahme jeweils einen durch die große Pleuelbohrung des Pleuels hindurchragenden, eng an der Bohrungswandung anliegenden Aufnahmebolzen mit halb- kreisförmigem Querschnitt aufweisen. Die Trennungslinie zwischen den beiden Bolzen liegt dabei genau in der Bruchtrennungsebene.

Vorteilhaft ist es, wenn die Halterung als Schlitten ausgebildet ist, auf der der Aufnahmebolzen befestigt ist. Die Befestigung soll dabei derart ausgestaltet sein, daß sich der Aufnahmebolzen beim Bruchtrennungsvorgang nicht verbiegen kann. Dies wird insbesondere dann erreicht, wenn sich jeder Aufnahmebolzen im Bereich seines freien Endes in Belastungsrichtung über eine abnehmbare Spannklammer am Schlitten bzw. der Aufnahme abstützt.

Für eine möglichst spielfreie und starre Befestigung des Pleuels für den Bruchtrennvorgang ist es zweckmäßig, daß die Kappe und/oder die Stange des Pleuels jeweils über Fixier- und Anlageelemente in der Aufnahme und der Halterung festspannbar und in Anlage an die Außenflächen der Aufnahmebolzen anpreßbar sind. Die Fixier- und Anlageelemente können dabei als normale Spannschrauben ausgebildet sein, die von drei Seiten auf die Kappe bzw. die Stange des Pleuels einwirken. Die Fixier- und Anlageelemente können jedoch auch mechanisch oder hydraulisch betätigbar sein.

Grundsätzlich können die Schlagmassen in jeder beliebigen Weise ausgestaltet sein. Eine besonders vorteilhafte Anordnung ergibt sich jedoch, wenn die Schlagmassen jeweils jochartig ausgebildet und mit zwei Schlagflächen ausgestattet sind, die mit Gegenschlagflächen am Schlitten zusammenwirken, die zu beiden Seiten der Aufnahmebolzen und damit zu beiden Seiten des Pleuels auf dem Schlitten angeordnet sind. Auf diese Weise wird die Schlagkraft der jeweiligen Schlagmasse derart in den Schlitten eingeleitet, daß daraus eine genau in der Pleuelachse liegende Bruchtrennkraft resultiert.

Wie bereits erwähnt, werden besonders vorteilhafte Bruchtrennungsergebnisse dann erzielt, wenn die Halterung bzw. die Halterungen in Stoßrichtung vorgespannt werden. Gemäß einem bevorzugten Ausführungsbeispiel ist die Vorrichtung hierzu mit einem an der Vorrichtungsbasis befestigten Vorspannzylinder ausgestattet, der mit seiner Kolbenstange an der Halterung bzw. dem Schlitten angreift.

Um die Masse der Halterung bzw. des Schlittens nach erfolgtem Bruchtrennvorgang abzubremsen, ist es vorteilhaft, wenn in der Bewegungsbahn der Halterung jeweils ein oder mehrere Dämpfungszylinder angeordnet sind.

Wie bereits im Zusammenhang mit der erfindungsgemäßen Verfahrensweise erwähnt, muß der auf die Halterung einwirkende gerade zentrale Stoß dem jeweils verwendeten Pleuelmaterial, der Form und der Größe der Bruchquerschnittsfläche sowie der jeweiligen Anordnung der den Bruchverlauf beeinflussenden Maßnahmen (wie z.B. den Kerben o.dgl.) genau angepaßt werden. Dies erfolgt im Wege einfacher Versuche über eine Veränderung des Gewichtes der Schlagmasse (ggf. auch über eine Veränderung des Gewichtes der Halterungen), sowie durch eine Veränderung der Geschwindigkeit der Schlagmasse. Bei stehender Anordnung der ortsfesten Vorrichtungsbasis kann die Geschwindigkeit der Schlagmasse durch Änderung der Fallhöhe ggf. in Unterstützung durch den Beschleunigungszylinder variiert werden. Bei liegender Anordnung erfolgt dies durch eine entsprechende Einstellung des Beschleunigungszylinders.

Im folgenden ist zur weiteren Erläuterung und zum besseren Verständnis ein Ausführungsbeispiel einer Vorrichtung zur Durchführung des Verfahrens unter Bezugnahme auf die beigefügten Zeichnungen näher beschrieben.
- Fig. 1: zeigt schematisch eine Gesamtansicht der erfindungsgemäßen Vorrichtung,
- Fig. 2: zeigt einen Schnitt in der Ebene II-II der Fig. 1,
- Fig. 3: zeigt schematisch in vergrößertem Maßstab ein Detail der Fig. 1,
- Fig. 4: zeigt eine Seitenansicht des Details gemäß Fig. 3 in einer teilweise Explosionsdarstellung, und
- Fig. 5: zeigt schematisch in einer perspektivischen Ansicht, ebenfalls in einer Explosionsdarstellung, Ausschnitte aus der Anordnung gemäß den Fig. 3 und 4.

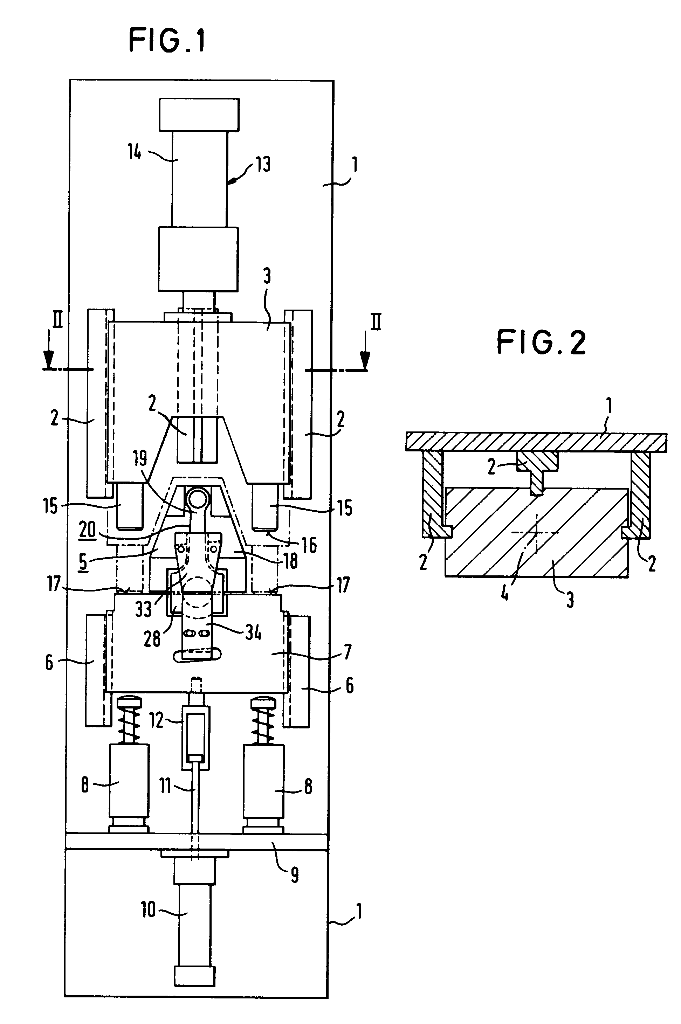

Wie aus den Fig. 1 und 2 hervorgeht, besteht die Vorrichtung aus einer Vorrichtungsbasis 1, die im vorliegenden Ausführungsbeispiel als Grundplatte ausgebildet ist. Auf der Grundplatte 1 sind Führungsleisten 2 angeordnet, über welche eine Schlagmasse 3 in Form eines jochartigen Schlaggewichtes in einer Achse 4 hin- und herbewegbar gelagert ist.

Im Anschluß an die Führungsleisten 2 ist auf der Vorrichtungsbasis 1 eine etwa der Jochform der Schlagmasse 3 angepaßte Aufnahme 5 starr befestigt. Auf der der Schlagmasse entgegengesetzten Seite der Aufnahme 5 sind auf der Vorrichtungsbasis 1 Führungsleisten 6 befestigt, über die eine Halterung 7 in Richtung der Achse 4 hin- und herverfahrbar gelagert ist.

Im Bewegungsweg der Halterung 7 sind auf der der Aufnahme 5 entgegengesetzten Seite zwei Dämpfungszylinder 8 vorgesehen, die auf einer Platte 9 befestigt sind, welche mit der Vorrichtungsbasis 1 verbunden ist. Die Platte 9 trägt auf der den Dämpfungszylindern 8 gegenüberliegenden Seite einen Vorspannzylinder 10, dessen Kolben 11 durch die Platte 9 hindurchragt und über ein Schloß 12 mit der Halterung 7 verbunden ist.

Auf der der Aufnahme 5 gegenüberliegenden Seite ist die Schlagmasse 3 mit einem Element 13 ausgestattet. Dieses Element 13 ist bei liegender Anordnung der Vorrichtungsbasis 1 ein Beschleunigungszylinder 14, mit dem die Schlagmasse 3 zum Bruchtrennvorgang in Richtung der Halterung 7 beschleunigt wird.

Bei stehender Anordnung der Vorrichtungsbasis 1, d.h. bei einer Vorrichtung, bei der die Schlagmasse 3 als schwerkraftgetriebenes Schlaggewicht ausgebildet ist, besteht das Element 13 aus einem Hebezylinder, mit dem die Schlagmasse 3 nach Durchführung des Bruchtrennvorganges wieder in ihre angehobene Lage gehoben und dort gehalten werden kann. Bei dieser Version ist der Hebezylinder mit einer nicht dargestellten Klinkenanordnung versehen, mit der die Schlagmasse 3 zur Durchführung des Schlagtrennvorganges in der angehobenen Lage ausgeklinkt werden kann.

Die Schlagmasse 3 ist im vorliegenden Fall jochartig ausgebildet und besitzt auf ihrer der Halterung 7 zugewandten Seite zu beiden Seiten der Aufnahme 5 Schlagbolzen 15, deren Schlagflächen 16 mit Gegenschlagflächen 17 auf der Oberseite der Halterung 7 zusammenwirken, wie dies in Fig. 1 mit strichpunktierten Linien angedeutet ist.

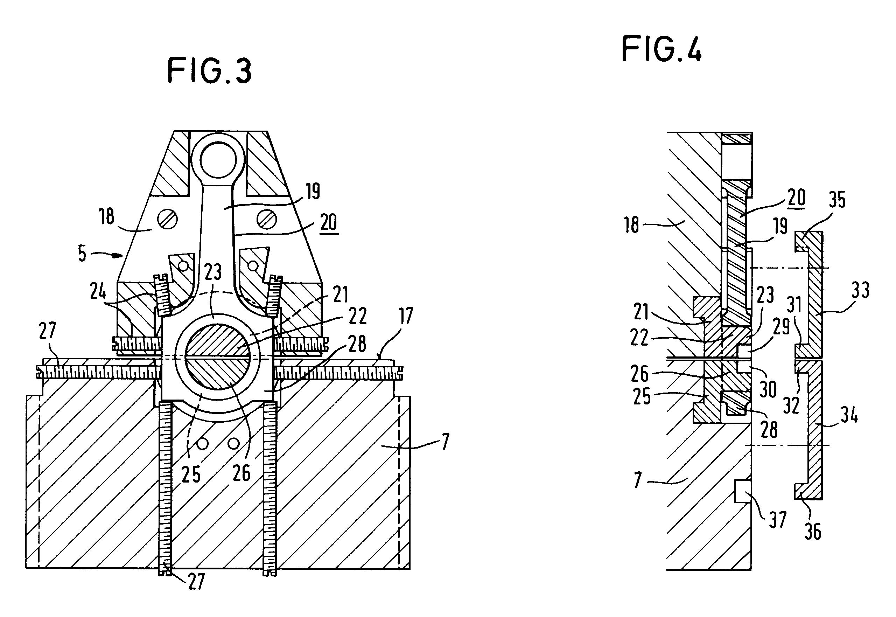

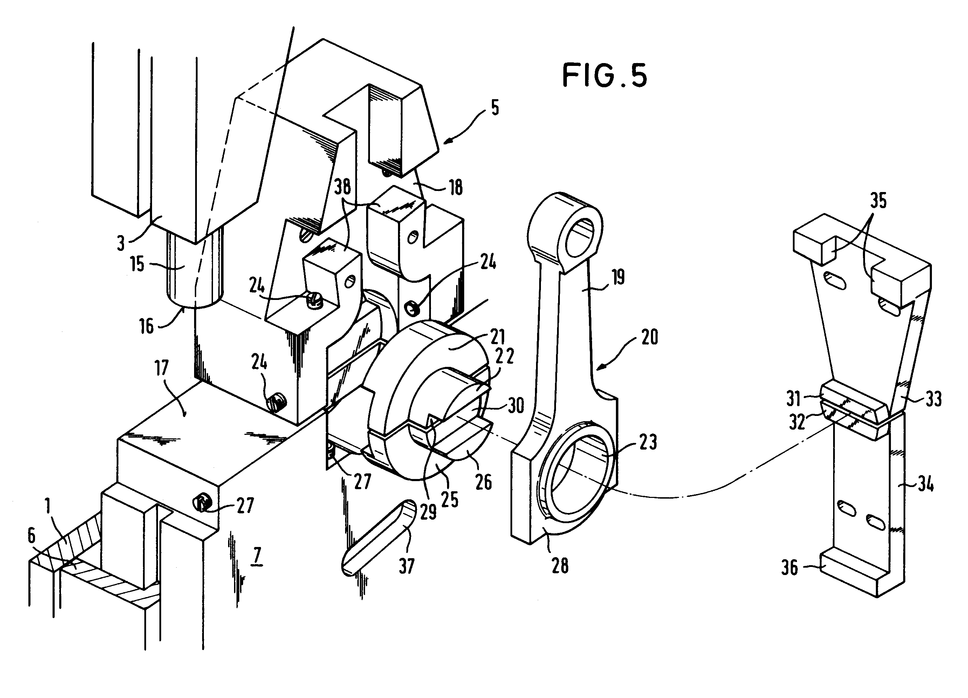

Der Aufbau der Aufnahme 5 und der Halterung 7 ist schematisch in den Fig. 3 bis 5 dargestellt. Die Aufnahme 5 besteht aus einem starren Formteil 18, das fest mit der als Grundplatte ausgebildeten Vorrichtungsbasis 1 verbunden ist. Dieses Formteil 18 besitzt der Stange 19 des Pleuels 20 angepaßte Ausnehmungen. In das Formteil 18 ist ferner ein Aufnahmbolzen 21 starr eingesetzt, dessen Zapfen 22 den Durchmesser des großen Auges 23 des Pleuels 20 aufweist. Wie aus den Fig. 3 und 5 hervorgeht, haben sowohl der Aufnahmebolzen 21 als auch der Zapfen 22 einen halbkreisförmigen Querschnitt.

Das Formteil 18 besitzt ferner vier Gewindebohrungen, in denen Schrauben angeordnet sind. Diese Schrauben stellen Fixier- und Anlageelemente 24 für die Stange 19 des Pleuels 20 dar, welche die Stange 19 zum einen fest im Formteil 18 und damit in der Aufnahme 5 haltern und zum anderen spielfrei an den Zapfen 22 des Aufnahmebolzens 21 der Aufnahme 5 anpressen.

Die Halterung 7 ist - wie bereits im Zusammenhang mit Fig. 1 erwähnt - als Schlitten ausgebildet, der über die Führungsleisten 6 in der Achse 4 (vgl. Fig. 2) hin- und herfahrbar gelagert ist. Der Schlitten ist ebenfalls mit einem Aufnahmebolzen 25 ausgestattet, welcher einen Zapfen 26 aufweist. Der Aufnahmebolzen 25 und der Zapfen 26 haben ebenfalls einen halbkreisförmigen Querschnitt und ergänzen den Aufnahmebolzen 21 bzw. den Zapfen 22 der Aufnahme 5 zu einer Anordnung, die das große Auge 23 des Pleuels 22 praktisch voll ausfüllt. Die Trennungsebene zwischen dem Aufnahmebolzen 21 und dem Aufnahmebolzen 25 liegt genau in der Bruchtrennungsebene der Vorrichtung.

Zu beiden Seiten des Aufnahmebolzens 25 ist die nach Art eines Schlittens ausgebildete Halterung 7 im Bereich ihrer Oberseite mit den im Zusammenhang mit der Beschreibung von Fig. 1 bereits genannten Gegenschlagflächen 17 für die Schlagflächen 16 der Schlagbolzen 15 der Schlagmasse 3 ausgestattet.

Der Schlitten besitzt ferner vier Gewindebohrungen, in denen Schrauben angeordnet sind, die als Fixier- und Anlageelemente 27 für die Kappe 28 des Pleuels 20 dienen. Durch diese Fixier- und Anlageelemente 27 wird die Kappe 28 des Pleuels fest in den Schlitten eingespannt und gegen den Zapfen 26 des Aufnahmebolzens 25 gepreßt.

Um ein Verbiegen der Aufnahmebolzen 21 und 25 beim Bruchtrennvorgang zu verhindern, ist im Bereich des freien Endes sowohl des Zapfens 22 als auch des Zapfens 26 eine Nut 29 bzw. 30 vorgesehen, in die die Enden 31 bzw. 32 einer Klammer 33 bzw. 34 eingreifen, die jeweils mit ihrem anderen Ende 35 bzw. 36 in einer Nut 37 bzw. auf Vorsprüngen 38 ruht (vergl. Fig. 4 und 5).

Wie aus Fig. 5 hervorgeht, haben sowohl die Nut 37 als auch die Vorsprünge 38 eine Neigung gegenüber der Bruchtrennungsebene, wodurch die Klammern 33 bzw. 34 durch Verschieben in Querrichtung spielfrei aufgesetzt, vorgespannt und im Anschluß daran mit dem Formteil 5 bzw. der Halterung 7 verschraubt werden können. Auf diese Weise ist ein Verbiegen der Zapfen 22 bzw. 26 beim Bruchtrennungsvorgang ausgeschlossen, da sich die freien Enden der Zapfen 22 bzw. 26 über die Klammern 33 bzw. 34 am Formteil 18 bzw. der Halterung 7 unmittelbar abstützen.

Wie aus Fig. 5 hervorgeht, stellen die Aufnahmebolzen 21 bzw. 25 jeweils getrennt herstellbare Teile dar, die in einer entsprechenden Ausnehmung im Formteil 18 bzw. in der Halterung 7 starr verankert werden.

Der Bruchtrennvorgang läuft wie folgt ab:
Zuerst wird die Schlagmasse 3 durch das Element 13 in ihre zurückgezogene Lage gebracht, wie dies in Fig. 1 dargestellt ist.

Im Anschluß daran wird die Halterung 7 in Richtung der Aufnahme 5 verschoben und der Pleuel 20 auf die Zapfen 22 bzw. 26 aufgeschoben. Anschließend werden die Klammern 33 und 34 aufgebracht und durch seitliches Verschieben vorgespannt und mit dem Formteil bzw. der Halterung 7 verschraubt. Im Anschluß daran werden die Fixier- und Anlageelemente 24 bzw. 27 festgezogen, so daß der Pleuel 20 starr sowohl in der Aufnahme 5 als auch in der Halterung 7 festgespannt ist.

Bei stehender Anordnung der Vorrichtungsbasis wird dann die eingangs beschriebene Klinkenanordnung gelöst, so daß die Schlagmasse 3 unter dem Einfluß der Schwerkraft nach unten fallen und mit den Schlagflächen 16 der Schlagbolzen 15 auf die Gegenschlagflächen 17 der Halterung 7 aufschlagen kann. Dadurch wird genau zentrisch in der Achse 4, die in der Pleuellängsachse liegt, eine Schlagkraft eingeleitet, durch die der Bruchtrennvorgang vollgezogen wird. In dieser Phase wird die Halterung 7 beschleunigt und diese Bewegung durch die Dämpfungszylinder 8 gestoppt.

Soll die Halterung 7 vor dem Bruchtrennvorgang vorgespannt werden, so wird der Vorspannzylinder 10 beaufschlagt und über die Kolbenstange 11 und das Schloß 12 die Halterung 7 in eine von der Aufnahme 5 weggerichtete Richtung gezogen.

Bei liegender Anordnung der Vorrichtungsbasis wird die Schlagmasse 3 durch den Beschleunigungszylinder 14 beschleunigt. Ansonsten läuft der Bruchtrennvorgang in der bereits beschriebenen Weise ab.

Nach abgeschlossenem Bruchtrennvorgang wird die Schlagmasse 3 in ihre Ausgangslage zurückgeschoben und der Vorspannzylinder 10 entlastet. Danach werden die Klammern 33 bzw. 34 abgeschraubt und die Stange 19 und die Kappe 28 aus der Vorrichtung herausgenommen. Die Vorrichtung ist dann für einen weiteren Bruchtrennvorgang frei.

Zur Verbesserung der Passgenauigkeit werden dann - wie eingangs bereits beschrieben - Kappe und Stange mit hoher Preßkraft in einem weiteren Arbeitsgang wieder aneinandergepreßt.

## Patentansprüche

1. Verfahren zur Bruchtrennung von Kappe und Stange von in Pulverschmiedetechnik hergestellten Pleueln, dadurch gekennzeichnet,
- daß die Kappe oder die Stange des Pleuels auf einer quer zur Bruchtrennungsebene verfahrbaren Halterung festgespannt wird,
- daß der nicht auf der Halterung festgelegte Teil des Pleuels ortsfest gehalten wird, und
- daß auf die Halterung in Bruchtrennungsrichtung ein in der Symmetrieachse des Pleuels wirkender gerader zentraler Stoß ausgeübt wird.

2. Verfahren nach Anspruch 1 dadurch gekennzeichnet, daß die Halterung in Stoßrichtung bis auf einen Wert unterhalb der Streckgrenze des Pleuelmaterials vorgespannt und im Anschluß daran der gerade zentrale Stoß ausgeübt wird.

3. Verfahren nach Anspruch 2, dadurch gekennzeichnet, daß die Vorspannkraft gleich oder kleiner 80% der Brechkraft ist.

4. Verfahren nach Anspruch 1, dadurch gekennzeichnet, daß die Halterung geradlinig und parallel zur Symmetrieachse des Pleuels verfahrbar ist.

5. Verfahren nach Anspruch 1, dadurch gekennzeichnet, daß unmittelbar nach dem Bruchtrennvorgang die Kappe und die Stange im Bereich der Bruchtrennungsebene mit hoher Preßkraft aneinandergepreßt werden.

6. Verfahren nach Anspruch 5, dadurch gekennzeichnet, daß die preßkraft der Spannkraft entspricht, mit der die Kappe und die Stange beim späteren Einsatz des Pleuels durch die Pleuelschrauben aufeinandergespannt werden.

7. Verfahren nach Anspruch 1 bis 6, dadurch gekennzeichnet, daß die den zentralen geraden Stoß beeinflussenden Massen und Geschwindigkeiten veränderbar sind.

8. Vorrichtung zur Durchführung des Verfahrens nach Anspruch 1, 2, 3 oder 4, mit einer ortsfesten Vorrichtungsbasis (1) gekennzeichnet durch:
- eine Aufnahme (5) für den ortsfest gehaltenen Teil des Pleuels (20), die auf der Vorrichtungsbasis starr befestigt ist,
- eine Halterung (7) für den nicht ortsfest gehaltenen Teil des Pleuels (20), die in einer auf der Vorrichtungsbasis (1) befestigten Führung quer zur Bruchtrennungsebene und parallel zur Symmetrieachse des Pleuels in Grenzen verfahrbar gelagert ist, sowie durch
- eine Schlagmasse (3), die auf die Halterung (7) in Bruchtrennrichtung des Pleuels einen in dessen Symmetrieachse wirksamen geraden zentralen Stoß ausübt.

9. Vorrichtung nach Anspruch 8, dadurch gekennzeichnet, daß die ortsfeste Vorrichtungsbasis (1) stehend angeordnet ist und die Schlagmasse (3) als schwerkraftgetriebenes Schlaggewicht ausgebildet ist.

10. Vorrichtung nach Anspruch 8, dadurch gekennzeichnet, daß die ortsfeste Vorrichtungsbasis liegend angeordnet ist und die Schlagmasse bzw. die Schlagmassen als kraftgetriebene Schlaggewichte ausgebildet sind.

11. Vorrichtung nach Anspruch 9 oder 10, dadurch gekennzeichnet, daß die Vorrichtungsbasis (1) als Grundplatte ausgebildet ist.

12. Vorrichtung nach Anspruch 9 und 11, dadurch gekennzeichnet, daß die Grundplatte in eine Ständeranordnung integriert ist.

13. Vorrichtung nach Anspruch 10, dadurch gekennzeichnet, daß der Kraftantrieb für das bzw. die Schlaggewichte einen hydraulisch oder pneumatisch betätigten Beschleunigungszylinder aufweist.

14. Vorrichtung nach Anspruch 9, dadurch gekennzeichnet, daß die Beschleunigung des schwerkraftgetriebenen Schlaggewichtes über einen hydraulischen oder pneumatischen Beschleunigungszylinder unterstützt ist.

15. Vorrichtung nach Anspruch 8, dadurch gekennzeichnet, daß die Schlagmasse (3) auf einer auf der Vorrichtungsbasis (1) befestigten Führung geradlinig hin- und herverschiebbar gelagert sind.

16. Vorrichtung nach Anspruch 8, dadurch gekennzeichnet, daß die Halterung (7) und die Aufnahme (5) jeweils einen durch die große Pleuelbohrung hindurchragenden, eng an den Bohrungsrändern anliegenden Aufnahmebolzen (21 bzw. 25) mit halbkreisförmigem Querschnitt aufweisen.

17. Vorrichtung nach Anspruch 8 oder 16, dadurch gekennzeichnet, daß die Halterung (7) als Schlitten ausgebildet ist, auf dem ein Aufnahmebolzen (25) befestigt ist.

18. Vorrichtung nach Anspruch 16, dadurch gekennzeichnet, daß der Aufnahmebolzen (21 bzw. 25) mit seinem einen Ende mit der Aufnahme bzw. der Halterung am Schlitten unmittelbar verbunden ist und sich das freie Ende des Aufnahmebolzens in Belastungsrichtung jeweils über eine abnehmbare Spannklammer (33 bzw. 34) an der Aufnahme bzw. dem Schlitten abstützt.

19. Vorrichtung nach Anspruch 16 bis 18, dadurch gekennzeichnet, daß die Kappe (19) und/oder die Stange (28) des Pleuels (20) jeweils über Fixier- und Anlageelemente (24 bzw. 27) in der Aufnahme und der Halterung festspannbar und in Anlage an den Aufnahmebolzen (21 bzw. 25) preßbar sind.

20. Vorrichtung nach Anspruch 8 und 17, dadurch gekennzeichnet, daß die Schlagmasse (3) jochartig ausgebildet und mit zwei Schlagflächen (16) ausgestattet sind, die mit Gegenschlagflächen (17) des Schlittens zusammenwirken, die zu beiden Seiten des Aufnahmebolzens (25) auf dem Schlitten angeordnet sind.

21. Vorrichtung nach Anspruch 8 zur Durchführung des Verfahrens nach Anspruch 2, dadurch gekennzeichnet, daß ein an der Vorrichtungsbasis (1) befestigter Vorspannzylinder (10) vorgesehen ist, der mit seiner Kolbenstange (11) an der Halterung (7) bzw. den Halterungen angreift.

22. Vorrichtung nach Anspruch 8, dadurch gekennzeichnet, daß in der Bewegungsbahn der jeweiligen Halterung (7) Dämpfungszylinder (8) angeordnet sind.

23. Vorrichtung nach einem oder mehreren der vorhergehenden Ansprüche 8 bis 22, dadurch gekennzeichnet, daß das Gewicht und die Geschwindigkeit der Schlagmasse bzw. der Schlagmassen veränderbar sind.

24. Vorrichtung nach einem oder mehreren der vorhergehenden Ansprüche 8 bis 23, dadurch gekennzeichnet, daß das Gewicht der Halterung bzw. der Halterungen veränderbar ist.

## Claims

1. Method for fracturing cap and shaft of connecting rods manufactured by powder forging, characterised
- in that the cap or the shaft of the connecting rod is fixed on a support movable perpendicularly to the plane of fracture,
- that the portion of the connecting rod not fixed on the support is held stationarily, and
- that a straight central impact acting in the axis of symmetry of the connecting rod is applied to the support in the direction of fracture.

2. Method according to claim 1, characterised in that the support is prestressed in the direction of impact to a value below the yield point of the connecting rod material and then the straight central impact is applied.

3. Method according to claim 2, characterised in that the prestressing force is equal to or less than 80% of the fracturing force.

4. Method according to claim 1, characterised in that the support is movable rectilinearly and parallel to the axis of symmetry of the connecting rod.

5. Method according to claim 1, characterised in that immediately after the fracturing operation the cap and the shaft are pressed against each other at high contact pressure in the region of the plane of fracture.

6. Method according to claim 5, characterised in that the contact pressure corresponds to the clamping force with which the cap and the shaft are pressed together by the connecting rod bolts during subsequent use of the connecting rod.

7. Method according to claims 1 to 6, characterised in that the weights and speeds affecting the central straight impact are variable.

8. Apparatus for carrying out the method according to claim 1, 2, 3 or 4, with a stationary base (1), characterised by:
- a holder (5) for the connecting rod (20) portion held stationarily, which is mounted rigidly on the base,
- a support (7) for the connecting rod (20) portion not held stationarily, which is mounted in a guide fixed to the base (1) for movement perpendicularly to the plane of fracture and parallel to the axis of symmetry of the connecting rod within limits, and by
- an impact mass (3) which applies to the support (7) in the direction of fracture of the connecting rod a straight central impact operative in the axis of symmetry of the connecting rod.

9. Apparatus according to claim 8, characterised in that the stationary base (1) is arranged vertically and the impact mass (3) is designed as a gravity-driven impact weight.

10. Apparatus according to claim 8, characterised in that the stationary base is arranged horizontally and the impact mass or masses are constructed as power-driven impact weights.

11. Apparatus according to claim 9 or 10, characterised in that the base (1) is constructed as a base plate.

12. Apparatus according to claim 9 and 11, characterised in that the base plate is incorporated into a stand assembly.

13. Apparatus according to claim 10, characterised in that the power drive for the impact weight or weights comprises a hydraulically or pneumatically operated accelerating cylinder.

14. Apparatus according to claim 9, characterised in that acceleration of the gravity-driven impact weight is assisted by a hydraulic or pneumatic accelerating cylinder.

15. Apparatus according to claim 8, characterised in that the impact mass (3) is mounted for rectilinear reciprocating movement on a guide fixed to the base (1).

16. Apparatus according to claim 8, characterised in that the support (7) and the holder (5) each comprise a holding bolt (21 or 25) of semicircular cross-section which extends through the large bore of the connecting rod and fits close to the bore edges.

17. Apparatus according to claim 8 or 16, characterised in that the support (7) is designed as a carriage on which the holding bolt (25) is mounted.

18. Apparatus according to claim 16, characterised in that the holding bolt (21 or 25) is directly connected by one end to the holder or the support on the carriage, and the free end of the holding bolt is supported in the direction of loading via a removable clamp (33 or 34) on the holder or carriage.

19. Apparatus according to claims 16 to 18, characterised in that the cap (19) and/or the shaft (28) of the connecting rod (20) in each case can be fixed in the holder and support by fixing and locating elements (24 or 27) and pressed into contact with the holding bolts (21 or 25).

20. Apparatus according to claim 8 and 17, characterised in that the impact mass (3) is designed after the fashion of a yoke and provided with two impact surfaces (16) which cooperate with counterimpact surfaces (17) on the carriage which are arranged on both sides of the holding bolt (25) on the carriage.

21. Apparatus according to claim 8 for carrying out the method according to claim 2, characterised in that there is provided a prestressing cylinder (10) which is fixed to the base (1) and which with its piston rod (11) engages the support (7) or supports.

22. Apparatus according to claim 8, characterised in that damping cylinders (8) are arranged in the path of movement of the respective support (7).

23. Apparatus according to one or more of the preceding claims 8 to 22, characterised in that the weight and speed of the impact mass or masses are variable.

24. Apparatus according to one or more of the preceding claims 8 to 23, characterised in that the weight of the support or supports is variable.

## Revendications

1. Procédé pour la séparation par rupture du chapeau et du corps de bielles fabriquées selon la technique de forgeage de poudre, caractérisé par le fait
- que l'on bride le chapeau de bielle ou le corps de bielle sur un support qui peut être déplacé, perpendiculairement au plan de séparation,
- que l'on tient sans possibilité de déplacement la partie de la bielle qui n'est pas bridée sur le support et
- que l'on applique sur le support, dans la direction de séparation par rupture, un choc central rectiligne qui agit dans l'axe de symétrie de la bielle.

2. Procédé selon la revendication 1, caractérisé par le fait que l'on applique sur le support, dans la direction du choc, une précontrainte jusqu'à une valeur qui est inférieure à la limite d'élasticité du matériau de la bielle, à la suite de quoi on applique le choc central rectiligne.

3. Procédé selon la revendication 2, caractérisé par le fait que la précontrainte est égale ou inférieure à 80 % de la force de rupture.

4. Procédé selon la revendication 1, caractérisé par le fait que le support peut se déplacer de manière rectiligne et parallèlement à l'axe de symétrie de la bielle.

5. Procédé selon la revendication 1, caractérisé par le fait que, immédiatement après la séparation par rupture, on applique l'un contre l'autre, avec une pression élevée, le chapeau et le corps de bielle dans la région du plan de séparation.

6. Procédé selon la revendication 5, caractérisé par le fait que la pression d'application correspond à la force de serrage avec laquelle le chapeau et le corps de bielle sont assemblés à l'aide des vis de bielle lors de l'utilisation ultérieure de la bielle.

7. Procédé selon les revendications 1 à 6, caractérisé par le fait que les masses et vitesses qui influent sur le choc central rectiligne peuvent être modifiées.

8. Dispositif pour la mise en oeuvre du procédé selon les revendications 1, 2, 3 ou 4, comportant une base (1) fixe, caractérisé par:
- un dispositif de fixation (5) pour la partie de la bielle (20) tenue de manière fixe qui est fixé rigidement sur la base (1)
- un support (7) pour la partie de la bielle (20) qui est tenue de manière non fixe, lequel support peut se déplacer dans certaines limites, perpendiculairement au plan de séparation par rupture et parallèlement à l'axe de symétrie de la bielle, dans une glissière fixée sur le base (1) du dispositif,
- une masse de percussion (3) qui applique sur le support (7), dans la direction de séparation par rupture de la bielle, un choc central rectiligne qui agit suivant l'axe de symétrie de la bielle.

9. Dispositif selon la revendication 8, caractérisé par le fait que la base (1) fixe du dispositif est disposée verticalement et la ou les masse(s) de percussion (3) est (sont) agencée(s) sous forme de poids entraîné(s) par la force de gravité.

10. Dispositif selon la revendication 8, caractérisé par le fait que la base (1) fixe du dispositif est disposée horizontalement et la ou les masse(s) de percussion (3) est (sont) agencée(s) sous forme de poids mû(s) par force.

11. Dispositif selon la revendication 9 ou 10, caractérisé par le fait que la base (1) du dispositif est agencée sous forme de socle.

12. Dispositif selon les revendications 9 et 11, caractérisé par le fait que le socle est intégré dans un bâti.

13. Dispositif selon la revendication 10, caractérisé par le fait que le dispositif d'entraînement par force de la ou des masse(s) de percussion comporte un vérin accélérateur à commande hydraulique ou pneumatique.

14. Dispositif selon la revendication 9, caractérisé par le fait que l'accélération de la masse de percussion mue par la force de gravité est renforcée par un vérin accélérateur hydraulique ou pneumatique.

15. Dispositif selon la revendication 8, caractérisé par le fait que la masse de percussion (3) est montée avec possibilité de déplacement alternatif rectiligne sur une glissière fixée sur la base (1) du dispositif.

16. Dispositif selon la revendication 8, caractérisé par le fait que le support (7) et le dispositif de fixation (5) présentent chacun un mandrin (21 ou 25) à section semi-circulaire qui pénètre dans l'alésage de tête de bielle et est appliqué avec précision contre les bords de l'alésage.

17. Dispositif selon la revendication 8 ou 16, caractérisé par le fait que le support (7) est agencé sous forme de chariot sur lequel est fixé un mandrin (25).

18. Dispositif selon la revendication 16, caractérisé par le fait que le mandrin (21 ou 25) est lié directement par l'une de ses extrémités au dispositif de fixation ou au support sur le chariot et l'extrémité libre du mandrin, dans la direction de sollicitation, prend appui sur le dispositif de fixation ou le chariot par l'intermédiaire chaque fois d'une bride serrage (33 ou 34) amovible.

19. Dispositif selon les revendications 16 à 18, caractérisé par le fait que le chapeau (19) et/ou le corps (28) de la bielle (20) peuvent être serrés dans le dispositif de fixation et dans le support par l'intermédiaire d'éléments de serrage et d'appui (24 à 27) et peuvent être pressés contre les mandrins (21 à 25).

20. Dispositif selon les revendications 8 et 17, caractérisé par le fait que la masse de percussion (3) a une forme de joug et est pourvue de deux surfaces de percussion (16) qui coopèrent avec des surfaces de percussion (7) conjuguées du chariot, de chaque côté du mandrin (25).

21. Dispositif selon la revendication 8, caractérisé par le fait qu'il est prévu un vérin d'application de précontrainte (10) qui est fixé sur la base (1) du dispositif et agit par sa tige de piston (11) sur le ou les support(s) (7)

22. Dispositif selon le revendication 8, caractérisé par le fait que des cylindres amortisseurs (8) sont disposés sur la trajectoire de déplacement du support (7) concerné.

23. Dispositif selon l'un ou plusieurs des revendications 8 à 22 précédentes, caractérisé par le fait que le poids et la vitesse de la masse de percussion ou des masses de percussion peuvent être modifiés.

24. Dispositif selon l'un ou plusieurs des revendications 8 à 23 précédentes, caractérisé par le fait que le poids du ou des support(s) peuvent être modifiés.
